# EUROPÄISCHE PATENTSCHRIFT

(11) **EP 1 757 479 B1**
(45) Veröffentlichungstag und Bekanntmachung des Hinweises auf die Patenterteilung: **28.11.2012**
(21) Anmeldenummer: 06015565.2
(22) Anmeldetag: 26.07.2006
(51) Int. Cl.: B60K 11/00

(54) **Kühlmodul und elastisches Lager dafür**
Cooling system and elastic bearing for same
Module de refroidissement avec un support élastique

(30) Priorität: 27.08.2005 DE 102005040721
(43) Veröffentlichungstag der Anmeldung: 28.02.2007
(73) Patentinhaber: Modine Manufacturing Company, Racine, Wisconsin 53403-2552 (US)
(72) Erfinder: Orso, Jochen, Dipl.-Ing., 72764 Reutlingen (DE); Nitsche, Werner, Dipl.-Ing., 73230 Kirchheim/Teck (DE); Hassler, Fidel, Dipl.-Ing., 73453 Abtsgmünd (DE); Narayanan, Sumanoharan, Dipl.-Ing., 89233 Neu-Ulm (DE)
(74) Vertreter: Wolter, Klaus-Dietrich

(56) Entgegenhaltungen:
- EP-A- 0 893 666
- EP-A- 1 213 554
- WO-A-99/30916
- DE-A1- 3 916 777
- DE-A1- 4 411 456
- DE-A1- 10 018 000
- DE-A1- 19 953 785
- DE-C1- 19 602 186
- US-A- 5 570 738

## Beschreibung

Die Erfindung betrifft ein Kühlmodul mit wenigstens zwei Wärmetauschern, beispielsweise einem Kühlflüssigkeitskühler und einem Ladeluftkühler, in einem Kraftfahrzeug, mit einer Abstützung, bestehend aus zwei elastischen Lagern, welche einerseits beispielsweise auf Trägern des Kraftfahrzeugs ruhen und andererseits beispielsweise an den Kühlern befestigte Traglaschen aufnehmen, um das Kühlmodul im Kraftfahrzeug elastisch zu lagern.

Das Kühlmodul ist aus der DE 100 18 000 B4 und auch bereits aus der DE 44 11 456B4 bekannt. Dort wurden die Traglaschen an den Einlass - und Auslassstutzen des Ladeluftkühlers befestigt. Der Wasserkühler bzw. der Kühlflüssigkeitskühler hingegen wurde am Ladeluftkühler befestigt. Die Traglaschen müssen deshalb das gesamte Kühlmodul abstützen. Von der schwingungsdämpfenden Abstützung nicht zu kompensierende Vibrationen werden vom Ladeluftkühler unmittelbar auf den Kühlflüssigkeitskühler übertragen, was als nachteilig anzusehen ist. Ferner könnte sich die Verbindung zwischen den beiden Kühlern nachteilig auf den Ausdehnungs- und Kontraktionsvorgang der Kühler auswirken, der als Folge von Temperaturwechselbelastungen stattfindet. Weiterer Stand der Technik geht aus US 5 570 738 hervor. Auch dort wurde ein Wärmetauscher an einem anderen Wärmetauscher befestigt.

Die Aufgabe der vorliegenden Erfindung besteht darin, die erwähnten Nachteile zu beseitigen oder abzuschwächen.

Erfindungsgemäß wird diese Aufgabe durch ein Kühlmodul mit den Merkmalen des Anspruchs 1 gelöst.

Weil die Kühler (Wärmetauscher) des Kühlmoduls individuell in den elastischen Lagern abgestützt sind, sind keine tragenden Verbindungen zwischen den Kühlern (Wärmetauschern) erforderlich, die das Ausdehnungs - und Kontraktionsverhalten der Wärmetauscher beeinträchtigen könnten. Ferner werden Vibrationen des einen Wärmetauschers nicht oder wenigstens in geringerem Umfang auf den anderen Wärmetauscher übertragen.

Es ist vorgesehen, dass jedes elastische Lager eine auf dem schwingungsdämpfenden, elastischen Element liegende Druckplatte aufweist, auf der die Traglasche eines Kühlers aufliegt.

Es ist weiter vorgesehen, dass jedes elastische Lager unterhalb der Druckplatte im elastischen Element Aufnahmen für Tragelemente eines anderen Kühlers aufweist.

Die zwei Teile jedes elastischen Lagers weisen eine wenigstens teilweise komplementäre Form auf.

Die Druckplatte befindet sich in einer Ausformung des einen Teils.

Die Kühler des Kühlmoduls sind zwar in Kühlluftströmungsrichtung hintereinander liegend angeordnet, aber weisen vorzugsweise keine tragenden Verbindungen untereinander auf.

Die individuellen Abstützungen können in den elastischen Lagern übereinander oder nebeneinander liegend angeordnet sein. Wegen weiterer Merkmale wird auf die Patentansprüche hingewiesen.

Im Anschluss wird die Erfindung unter Bezugnahme auf die beiliegenden Zeichnungen in Ausführungsbeispielen beschrieben.
Die Fig. 1 zeigt eine perspektivische Teil-Ansicht des Kühlmoduls.
Die Fig. 2-7 zeigen teilweise unterschiedliche elastische Lager in perspektivischer Ansicht. Dabei zeigt die Fig. 3 eine andere Lösung als die Fig. 2 und 4 bzw. 5 und 6. Die Fig. 8 zeigt einen Schnitt durch das Lager gemäß Fig. 7.

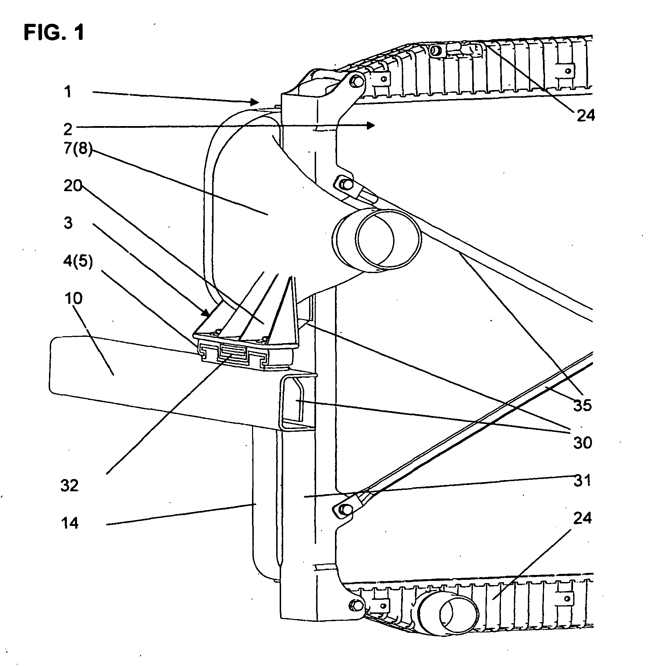

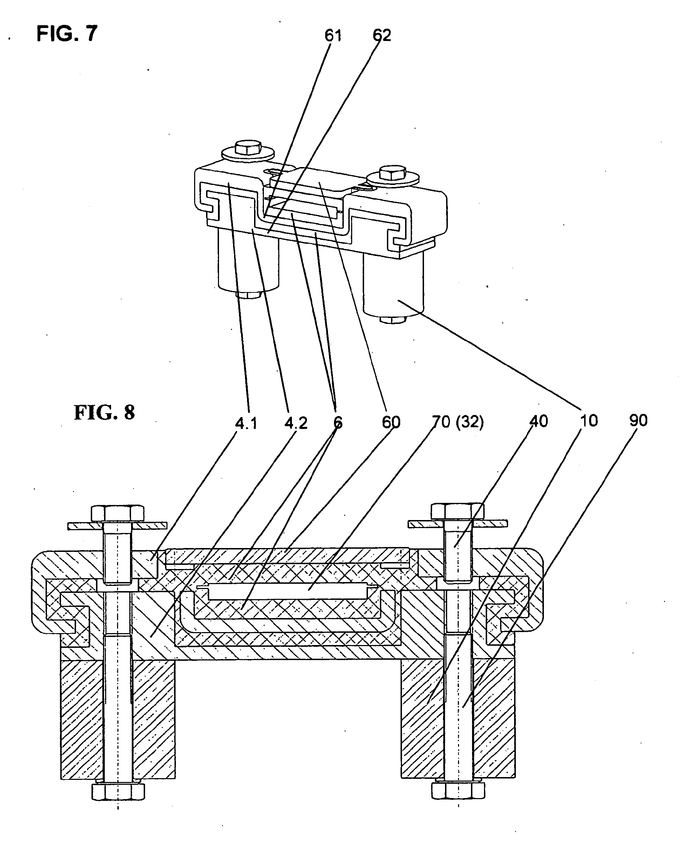

Das in ein nicht gezeigtes Kraftfahrzeug eingebaute Kühlmodul besteht im Ausführungsbeispiel lediglich aus zwei Wärmetauschern, wobei der in Blickrichtung hintere Wärmetauscher **1** ein Ladeluftkühler ist und der vordere Wärmetauscher **2** den Kühlflüssigkeitskühler darstellen soll. Andere zum Kühlmodul gehörende Teile wurden hier weggelassen. Vom Kraftfahrzeug ist nur einer der zwei Längsträger **10** angedeutet worden, da in der Fig. 1 nur eine Seite des Kühlmoduls abgebildet wurde. Die andere nicht gezeichnete Seite ist identisch ausgebildet und weist mithin den zweiten Längsträger **10**, das zweite elastische Lager **5** und andere identische Teile auf. Der Kühlmittelkühler **2** weist einen oberen und einen unteren horizontal angeordneten Sammelkasten **24** auf, zwischen denen sich nicht gezeigte Flachrohre für die Kühlflüssigkeit und dazwischen eingefügte Wellrippen für Kühlluft befinden, die demnach senkrecht zur Zeichnungsebene durch beide Kühler **1, 2** strömt. Der Ladeluftkühler **1** besitzt hingegen zwei vertikal angeordnete Sammelkästen **14,** von denen einer teilweise erkennbar ist. An den Ladeluft - Sammelkästen **14** befindet sich ein Einströmstutzen bzw. ein Ausströmstutzen **7**; **8** für die Ladeluft. Einer davon ist teilweise erkennbar. An den Ein - bzw. Ausströmstutzen **7, 8** befindet sich jeweils ein Traglasche **20**, die der Abstützung des Ladeluftkühlers **1** dient. Im Ausführungsbeispiel sind die Sammelkästen **14** einschließlich der Ein - bzw. Ausströmstutzen **7, 8** aus Aluminium im Druckgussverfahren hergestellt worden, sodass es sich anbietet, auf die seit mehr als 20 Jahren bekannte Ausbildung zurückzugreifen, wonach die Traglaschen **20** einteilig mit den Stutzen **7, 8** ausgeformt und gleichzeitig mit Versteifungen versehen sind, welche in der Fig. 1 erkennbar sind. Die Traglaschen **20** ruhen auf einer elastisch gelagerten Druckplatte **60** der elastischen Lager **4, 5**, was unter Bezugnahme auf die Fig. **7** später näher erläutert wird. Der Kühlflüssigkeitskühler **2** weist dessen beide Sammelkästen **24** verbindende Seitenteile **31** auf, an denen Tragelemente **30** befestigt sind, die der Abstützung des Kühlflüssigkeitskühlers **2** in den elastischen Lagern **4, 5** dienen. Die beiden Seitenteile **31** sind mittels Querstreben **35** miteinander verbunden. Im gezeigten Ausführungsbeispiel wurden an beiden Seitenteilen **31** jeweils zwei Tragelemente **30** vorgesehen. Die Tragelemente **30** besitzen eine seitlich abstehende Abkröpfung **32**, die, von oben bzw. unten kommend, aneinander anliegen und unterhalb der Druckplatte **60** in einer korrespondierenden Aufnahme **70**, die im elastischen Element 6 der elastischen Lager **4, 5** ausgebildet ist, münden. Die beiden Abkröpfungen **32** könnten auch in relativer Nähe zueinander angeordnet sein und in separate Aufnahmen **70** eingeführt werden.

Die Fig. 8 zeigt nun die Einzelheiten der beiden elastischen Lager **4, 5** in einer Schnittdarstellung. Der Schnitt ist ein Mittellängsschnitt durch das in der Fig. 7 gezeigte Lager. Die Lager **4, 5** bestehen aus einem ersten oder oberen Teil **4.1** und einem zweiten oder unteren Teil **4.2**. Beide Teile **4.1** und **4.2** weisen eine zueinander komplementäre Form auf, was sich unter anderem darin ausdrückt, dass sich die beiden Teile **4.1, 4.2** am linken und rechten Rand nach der Art einer Klammer überlappen. Im Mittelabschnitt sitzt das obere Teil **4.1** mit einer Ausformung **61** in einer komplementären Ausformung **62** des unteren Teils **4.2**. Zwischen den beiden Teilen **4.1, 4.2** befindet sich das elastische Element **6.** Unterhalb des zweiten oder unteren Teils **4.2** befinden sich die Längsträger **10** (Fig. 1) des Kraftfahrzeuges. Zur Befestigung dienen Befestigungselemente **90,** die lösbar mit dem zweiten oder unteren Teil **4.2** verbunden sind. Die Befestigungselemente **40** dienen dazu, die Traglasche **20** auf dem ersten oder oberen Teil **4.1** zu befestigen. Wie die Fig. 8 weiter zeigt, ist eine vertikal bewegbare Druckplatte **60** als drittes Teil in der erwähnten Ausnehmung oder Ausformung des ersten oder oberen Teils **4.1** angeordnet, die auf dem elastischen Element **6** ruht. In der gezeigten unbelasteten Position, steht die Druckplatte **60** etwas über dem ersten oder oberen Teil **4.1** hervor, wodurch sozusagen ein Federweg zur Verfügung gestellt wird. Dieser Überstand wird durch die Kompression des elastischen Elements **6** reduziert, wenn mittels der erwähnten weiteren Befestigungselemente **40** die das Gewicht des Ladeluftkühlers **1** tragende Traglasche **20** auf dem oberen Teil **4.1** befestigt ist. Es versteht sich, dass der Elastizitätsgrad des elastischen Elements **6** vom Fachmann entsprechend ausgewählt wird, um den vorhandenen Lagerkräften zu entsprechen. Ferner kann bekanntlich durch das Vorsehen von Hohlräumen im elastischen Element **6** Einfluss auf das elastische Verhalten ausgeübt werden. Im elastischen Element **6** ist die bereits erwähnte Aufnahme **70** vorhanden, die etwa dem Querschnitt der Abkröpfung **32** an den Tragelementen **31** entspricht, um dieselben darin aufnehmen zu können.

Da zwischen den beiden Wärmetauschern **1** und **2** gemäß diesem Vorschlag keine tragenden horizontalen Verbindungen bestehen, scheint das Auswechseln einzelner Wärmetauscher, beispielsweise im Servicefall, einfacher geworden zu sein. Da außerdem im Stand der Technik der eine Wärmetauscher das Gewicht und die Beschleunigungskräfte des anderen Wärmetauschers aufnehmen muss, ist dazu eine entsprechend stabile Gestaltung erforderlich. Im Stand der Technik werden Kühlmodule mitunter auch in speziellen Rahmenkonstruktionen angeordnet und im Kraftfahrzeug befestigt. Auch in dieser Beziehung hat die vorgeschlagene Lösung Vorteile.

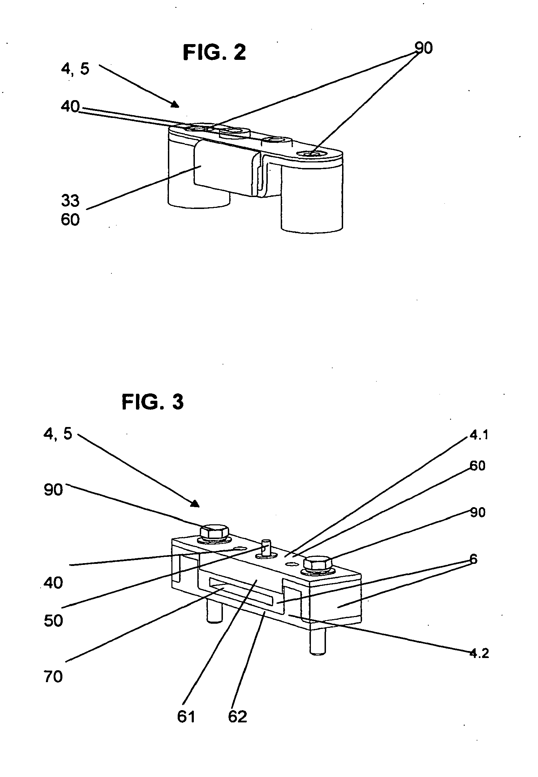

Die Ausbildung der elastischen Lager **4, 5** kann gemäß den Fig. 2 - 6 verändert bzw. vereinfacht werden, um weitere Vorteile zu erreichen, ohne dabei von der grundsätzlichen Idee abzuweichen. Gemäß der Fig. 3 können die Lager **4, 5** so ausgebildet sein, dass das erste oder obere Teil **4.1** gleichzeitig die Funktion der beschriebenen Druckplatte **60** übernehmen kann. Das erste oder obere Teil **4.1** bzw. die Druckplatte **60** und das zweite oder untere Teil **4.2** sind allgemein komplementär ausgebildet und greifen ineinander. Die beiden verstärkten Schenkel des zweiten oder unteren Teils erlauben eine stabile Befestigung auf den Längsträgern **10** mittels der erwähnten Befestigungselemente **90.** Es kann ein Stift **50** oder dergleichen vorgesehen werden, der sich vom unteren Teil **4.2** bis durch das obere Teil **4.1** erstreckt und dort hervor steht. Mit einem solchen Stift **50** können die Lager **4, 5** an dem vormontierten Kühlmodul angebracht und gehalten werden.

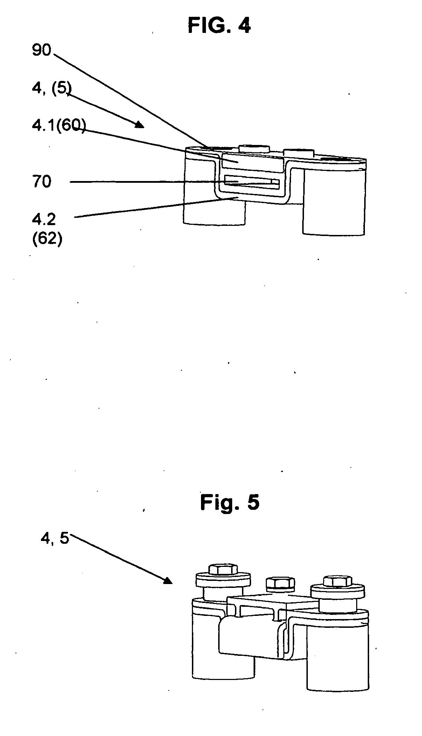

Wie die Fig. 2 und 5 zeigen, kann es vorteilhaft sein, an dem ersten oder oberen Teil **4.1** einen abgebogenen Schenkel **33** vorzusehen, um das Abrutschen des oberen Teils **4.1** zusammen mit dem Wärmetauscher **1** im Falle des Versagens des elastischen Elements **6** zu verhindern. Gewöhnlich sind jedoch elastische Elemente fest mit den Teilen **4.1** und/oder **4.2** verbunden, beispielsweise daran anvulkanisiert bzw. geklebt. Es können auch zusätzlich formschlüssige Verbindungen vorgesehen werden.

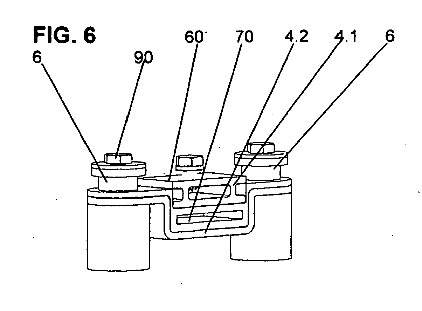

Wie die anderen Figuren zeigen, kann zur Befestigung der Traglasche **20** bzw. des Ladeluftkühlers **1** auch ein separates Befestigungsmittel (Schraube in der Mitte) vorgesehen werden. Ferner kann, im Unterschied zu den Figuren 7 und 8, die Befestigung der Lager **4, 5** an den Längsträgern **10** von der Oberseite aus vorgenommen werden, was ebenfalls in den Fig. 2 - 6 gezeigt ist. Die entsprechenden Befestigungsmittel **90** erstrecken sich demnach von oben durch die beiden am weitesten voneinander entfernten Öffnungen. Die beiden zentral benachbarten Öffnungen dienen der Befestigung der Traglasche **20** des Ladeluftkühlers **1**. Es kann auch auf zwei komplementäre Teile **4.1** und **4.2** verzichtet werden. Beispielsweise kann das zweite oder untere Teil **4.2** u-förmig ausgebildet sein und zwischen den Schenkeln kann sich die vertikal bewegbare Druckplatte **60** als zweites oder oberes Teil befinden, was den Figuren 5 und 6 entnommen werden kann. Diese Figuren zeigen außerdem eine abweichende Ausbildung der Formgebung des elastischen Elements **6**. Das elastische Element **6** erstreckt sich nach oben bis unterhalb des Kopfes des Befestigungsmittels **90**. Es ist in diesem Bereich nach der Art einer Hülse ausgebildet, durch die das Befestigungsmittel **90** hindurch geht. Das zweite oder untere Teil **4.2** ist, wie bereits beschrieben, u-förmig verformt und nimmt das von den Hülsen nach unten sich erstreckende elastische Element **6** und die darüber angeordnete Druckplatte **60** auf. Das elastische Element **6** kann auch mittels mehrerer nicht verbundener elastischer Teile dargestellt werden.

## Patentansprüche

1. Kühlmodul mit wenigstens zwei Wärmetauschern (1, 2), beispielsweise einem Kühlflüssigkeitskühler und einem Ladeluftkühler, in einem Kraftfahrzeug, mit einer Abstützung (3), bestehend aus zwei elastischen Lagern (4, 5), welche auf Trägern (10) des Kraftfahrzeugs zu ruhen geeignet sind und an den Sammelkästen (14) oder den Seitenteilen (31) eines Wärmetauschers (1) befestigte Traglaschen (20 bzw. 30) aufnehmen, wobei die elastischen Lager (4; 5) aus wenigstens zwei Teilen (4.1, 4.2) bestehen, zwischen denen ein elastisches Element (6) angeordnet ist,
**dadurch gekennzeichnet, dass** die Wärmetauscher (1, 2) des Kühlmoduls individuell in den elastischen Lagern (4, 5) elastisch abgestützt sind.

2. Kühlmodul nach Anspruch 1, **dadurch gekennzeichnet, dass** jedes elastische Lager (4, 5) eine auf dem elastischen Element (6) liegende bewegliche Druckplatte (60) aufweist, auf der ein Wärmetauscher (1) vorzugsweise mittels einer Traglasche (20) aufliegt, um eine der Abstützungen zu bilden.

3. Kühlmodul nach Anspruch 2 **dadurch gekennzeichnet, dass** jedes elastische Lager (4, 5) unterhalb der Druckplatte (60) im elastischen Werkstoff (6) wenigstens eine Aufnahme (70) für ein Tragelement (30) eines anderen Wärmetauschers (2) aufweist, um eine andere Abstützung zu bilden.

4. Kühlmodul nach einem der vorstehenden Ansprüche, **dadurch gekennzeichnet, dass** die zwei Teile (4.1, 4.2) jedes elastischen Lagers (4, 5) eine wenigstens teilweise komplementäre Form aufweisen, wobei dazwischen das elastische Element (6), beispielsweise ein geeigneter Gummi, angeordnet ist.

5. Kühlmodul nach einem der Ansprüche 2 bis 4 **dadurch gekennzeichnet, dass** die Druckplatte (60) als drittes Teil sich in einer Ausformung (61) des ersten Teils (4.1) befindet, wobei sich die Ausformung (61) in eine komplementäre Ausformung (62) des zweiten Teils (4.2) erstreckt.

6. Kühlmodul nach einem der vorstehenden Ansprüche 2 - 3, **dadurch gekennzeichnet, dass** das erste Teil (4.1) der zwei Teile des elastischen Lagers (4, 5) mittels der Druckplatte 60 gebildet ist, die in einer Ausformung (62) des zweiten Teils (4.2) auf dem elastischen Element (6) aufliegt und beweglich ist.

7. Kühlmodul nach einem der vorstehenden Ansprüche, **dadurch gekennzeichnet, dass** die Wärmetauscher (1, 2) des Kühlmoduls zwar, wie an sich bekannt, in Kühllüftströmungsrichtung hintereinander liegend angeordnet, aber vorzugsweise keine tragenden Verbindungen untereinander aufweisen.

8. Kühlmodul nach einem der vorstehenden Ansprüche, **dadurch gekennzeichnet, dass** die individuellen Abstützungen der Wärmetauscher in den elastischen Lagern vorzugsweise übereinander liegend angeordnet sind.

9. Kühlmodul nach einem der vorstehenden Ansprüche, **dadurch gekennzeichnet, dass** das Tragelement (30) des anderen Wärmetauschers (2) an dessen Seitenteil (31) lösbar oder unlösbar angebracht ist.

## Claims

1. Cooling system with at least two heat exchangers (1, 2), for example with a cooling-liquid cooler and a charge-air cooler, in a motor vehicle, with a support (3) consisting of two elastic bearings (4, 5) which are suitable for resting on bearers (10) of the motor vehicle and receive carrying straps (20 and 30) fastened to the header boxes (14) or side parts (31) of a heat exchanger (1), the elastic bearings (4; 5) consisting of at least two parts (4.1, 4.2), between which an elastic element (6) is arranged, **characterized in that** the heat exchangers (1, 2) of the cooling system are elastically supported individually in the elastic bearings (4, 5).

2. Cooling system according to Claim 1, **characterized in that** each elastic bearing (4, 5) has a moveable pressure plate (60) which lies on the elastic element (6) which lies on the elastic elements (6) and on which a heat exchanger (1) lies, preferably by means of a carrying strap (20), in order to form one of the supports.

3. Cooling system according to Claim 2, **characterized in that** each elastic bearing (4, 5) has beneath the pressure plate (60), in the elastic material (6), at least one receptacle (70) for a carrying element (30) of another heat exchanger (2), in order to form another support.

4. Cooling system according to one of the preceding claims, **characterized in that** the two parts (4.1, 4.2) of each elastic bearing (4, 5) have an at least partially complementary shape, the elastic element (6), for example a suitable rubber, being arranged between them.

5. Cooling system according to one of Claims 2 to 4, **characterized in that** the pressure plate (60) is located as a third part in a shaped-out portion (61) of the first part (4.1), the shaped-out portion (61) extending into a complementary shaped-out portion (62) of the second part (4.2).

6. Cooling system according to one of the preceding Claims 2 - 3, **characterized in that** the first part (4.1) of the two parts of the elastic bearing (4, 5) is formed by means of the pressure plate (60) which lies and is movable on the elastic element (6) in a shaped-out portion (62) of the second part (4.2).

7. Cooling system according to one of the preceding claims, **characterized in that** the heat exchangers (1, 2) of the cooling system are arranged one behind the other in the cooling-air flow direction, as is known per se, but preferably have no carrying connections to one another.

8. Cooling system according to one of the preceding claims, **characterized in that** the individual supports of the heat exchangers are arranged preferably one above the other in the elastic bearings.

9. Cooling system according to one of the preceding claims, **characterized in that** the carrying element (30) of the other heat exchanger (2) is attached releaseably or unreleaseably to the side part (31) of the latter.

## Revendications

1. Module de refroidissement doté d'au moins deux échangeurs thermiques (1, 2), par exemple un refroidisseur de liquide de refroidissement et un refroidisseur d'air de charge, dans un véhicule automobile, avec un renfort (3), composé de deux paliers élastiques (4, 5) adaptés pour reposer sur les supports (10) du véhicule automobile et recevoir des brides de maintien (20 et/ou 30) fixées aux caissons de collecte (14) ou aux parties latérales (31) d'un échangeur thermique (1), le palier élastique (4 ; 5) étant composé d'au moins deux parties (4.1, 4.2) entre lesquelles est disposé un élément élastique (6), **caractérisé en ce que** les échangeurs thermiques (1, 2) du module de refroidissement sont maintenus individuellement de façon élastique dans les paliers élastiques (4, 5).

2. Module de refroidissement selon la revendication 1, **caractérisé en ce que** chaque palier élastique (4, 5) comporte une plaque de compression (60) mobile reposant sur l'élément élastique (6) sur laquelle repose un échangeur thermique (1) servant à former un des renforts, de préférence par l'intermédiaire d'une bride de maintien (20).

3. Module de refroidissement selon la revendication 2, **caractérisé en ce que** chaque palier élastique (4, 5) comporte au moins un logement (70) prévu pour un élément de support (30) d'un autre échangeur thermique (2) en vue de former un autre renfort en dessous de la plaque de compression (60) en matière élastique (6).

4. Module de refroidissement selon l'une quelconque des revendications précédentes, **caractérisé en ce que** les deux parties (4.1, 4.2) de chaque palier élastique (4, 5) présentent une forme au moins en partie complémentaire entre lesquelles l'élément élastique (6), par exemple un caoutchouc adapté, est disposé.

5. Module de refroidissement selon l'une quelconque des revendications 2 à 4, **caractérisé en ce que** la plaque de compression (60) servant de troisième partie se trouve dans une forme saillante (61) de la première partie (4.1), ladite forme saillante (61) s'étendant dans une forme saillante (62) complémentaire de la deuxième partie (4.2).

6. Module de refroidissement selon l'une quelconque des revendications 2 et 3, **caractérisé en ce que** la première partie (4.1) des deux parties du palier élastique (4, 5) est formée à l'aide de la plaque de compression 60 reposant de façon mobile sur l'élément élastique (6) dans une forme saillante (62) de la deuxième partie (4.2).

7. Module de refroidissement selon l'une quelconque des revendications précédentes, **caractérisé en ce que** les échangeurs thermiques (1, 2) du module de refroidissement sont certes disposés de façon connue en soir à plat l'un derrière l'autre dans la direction d'écoulement d'air de refroidissement mais ne comportent de préférence aucune liaison portante l'un par rapport à l'autre.

8. Module de refroidissement selon l'une quelconque des revendications précédentes, **caractérisé en ce que** les renforts individuels des échangeurs thermiques sont disposés dans les paliers élastiques, de préférence les uns au-dessus des autres.

9. Module de refroidissement selon l'une quelconque des revendications précédentes, **caractérisé en ce que** l'élément de support (30) de l'autre échangeur thermique (2) est placé de façon amovible ou inamovible au niveau de sa partie latérale (31).
